# EUROPEAN PATENT APPLICATION

(11) **EP 4 756 282 A1**
(43) Date of publication of application: **10.06.2026**
(21) Application number: 24849528.5
(22) Date of filing: 26.07.2024
(51) Int. Cl.: F21S 41/14, F21S 41/32, F21S 41/65, F21K 9/68, F21K 9/90, F21Y 115/10

(54) **LIGHTING DEVICE AND LAMP**

(30) Priority: 28.07.2023 KR 20230099228; 23.07.2024 KR 20240097359
(71) Applicant: LG INNOTEK CO. LTD, Gangseo-gu Seoul 07796 (KR)
(72) Inventor: LEE, Dong Hyun, Seoul 07796 (KR); EOM, Dong Il, Seoul 07796 (KR); KIM, Jin Ho, Seoul 07796 (KR)
(74) Representative: M. Zardi & Co S.A.
(86) International application number: PCT/KR2024/010981
(87) International publication number: WO 2025/028959

(57) **Abstract**

A lighting device disclosed in an embodiment of the invention comprises: a first light source portion; an optical member disposed obliquely on the first light source portion; and a second light source portion disposed on the other side of the optical member, wherein the second light source portion is disposed in a direction perpendicular to an optical axis of the first light source portion, the optical member transmits first light emitted from the first light source portion and reflects second light emitted from the second light source portion, and each of the first and second lights emitted through the optical member is linear light or surface light, and may be provided as an superimposing three-dimensional image.

## Description

### [Technical Field]

An embodiment relates to a lighting device and a lamp

### [Background Art]

Lighting applications include vehicle lights as well as backlights for displays and signs. Light-emitting device, such as light emitting diode (LED), have advantages such as low power consumption, semi-permanent life, fast response speed, safety, and environmental friendliness compared to conventional light sources such as fluorescent lamps and incandescent lamps. These light emitting diodes are applied to various display devices, various lighting devices such as indoor or outdoor lights. A lamp that uses a light emitting diode as a vehicle light source is being proposed. Compared with incandescent lamps, light emitting diodes are advantageous in that power consumption is small. The small size of these LEDs allows for greater design flexibility, and their semi-permanent lifespan also offers economical benefits.

Meanwhile, with the recent emphasis on lighting design, a variety of designs are being developed. Lighting designs that incorporate three-dimensional lighting can offer even more aesthetic appeal.

### [Disclosure]

### [Technical Problem]

An embodiment of the invention provides a lighting device and a lamp in which two or more types of lighting are superimposed. An embodiment of the invention provides a lighting device and a lamp that emit three-dimensional lighting. An embodiment of the invention provides a lighting device and a lamp for providing a curved or flat image of an interior or exterior lamp of a vehicle as three-dimensional lighting. An embodiment of the invention provides a lighting device and a lamp that superimpose and display an image of a reflected light source and an image of a transmitted light source by an optical member that transmits and reflects light between different light source portions. An embodiment of the invention improves the reliability of the lighting device and the lamp, and such a lighting device may be applied to a vehicle lamp or electronic device.

### [Technical Solution]

The lighting device of an embodiment of the invention comprises: a first light source portion; an optical member disposed obliquely on the first light source portion; and a second light source portion disposed on another side of the optical member, wherein the second light source portion is disposed in a direction perpendicular to a first optical axis of the first light source portion, the optical member transmits first light emitted from the first light source portion and reflects second light emitted from the second light source portion, and the first and second lights emitted through the optical member are each linear or planar and are provided as an overlapping three-dimensional image.

According to an embodiment of the invention, the first light source portion comprises a first substrate, a first light-emitting portion disposed on the first substrate and having an open inner side, and a first light-emitting surface disposed on the first light-emitting portion. The second light source portion comprises a second substrate, a plurality of second light-emitting portions disposed on the second substrate and spaced apart from each other in a direction of the first optical axis of the first light source portion, and a plurality of second light-emitting surfaces disposed on each of the second light-emitting portions.

According to an embodiment of the invention, at least one of the first light-emitting portion and the plurality of second light-emitting portions may have different thicknesses. A length of the second light source portion may be a length of the first light source portion in the first optical axis direction and may be less than or equal to the length of an open region of the first light source portion. The plurality of first light sources may be spaced apart from each other in the second optical axis direction of the second light source portion, and the second optical axis direction is orthogonal to the first optical axis direction.

According to an embodiment of the invention, the second light-emitting portion may include a second-first light-emitting portion and a second-second light-emitting portion disposed on the inner and outer sides of the second-first light-emitting portion. A second-second light-emitting surface of the second-second light-emitting portion may be positioned higher than a height of a second-first light-emitting surface of the second-first light-emitting portion with respect to the second substrate. The surface light images of the first and second lights may have different shapes.

According to an embodiment of the invention, a third light source portion is disposed on the other side of the optical member, and the optical member may reflect third light emitted from the third light source portion. The lighting image of the lights emitted through the optical member may be displayed as at least one of a first image in which the first and second lights superimpose and a second image in which the second and third lights superimpose.

A lamp according to an embodiment of the invention comprises a lighting device; and a lamp having the lighting device, wherein the lighting device comprises the lighting device disclosed above, and the lamp may be applied to the interior or exterior of a vehicle.

### [Advantageous Effects]

According to embodiments of the invention, various lighting designs with three-dimensional lighting may be provided. Furthermore, by applying three-dimensional lighting to vehicle exterior lamps, three-dimensional images may be displayed as curved or flat images. Furthermore, three-dimensional lighting with different colors may be provided. Furthermore, using a three-dimensional lighting device, a variety of displays may be achieved, such as three-dimensional lighting with different luminosity, three-dimensional lighting with different light-emitting surfaces, and three-dimensional lighting with different colors. Furthermore, using a lighting device comprising a surface light source, a three-dimensional image with surface light may be provided.

According to embodiments of the invention, by combining at least two light sources, a lighting image with various three-dimensional shapes may be provided depending on the shape, color, and driving method, thereby improving the reliability of the lighting device and lamp.

### [Description of Drawings]

FIG. 1 is a side cross-sectional view illustrating a lighting device according to an embodiment of the invention.
FIG. 2 is a drawing illustrating a lighting image of the lighting device of FIG. 1.
FIG. 3 is a drawing illustrating three-dimensional lighting using the lighting device of FIG. 1.
FIG. 4 is a side cross-sectional view illustrating a first example of a lighting device according to an embodiment of the invention.
FIGS. 5(A) and 5(B) are drawings illustrating examples of lighting images using the lighting device of FIG. 4.
FIG. 6 is a side cross-sectional view illustrating a second example of a lighting device according to an embodiment of the invention.
FIG. 7 is a side cross-sectional view illustrating a third example of a lighting device according to an embodiment of the invention.
FIG. 8 is a side cross-sectional view illustrating a fourth example of a lighting device according to an embodiment of the invention.
FIG. 9 is a side cross-sectional view illustrating a fifth example of a lighting device according to an embodiment of the invention.
FIG. 10 and 11 are drawings illustrating a manufacturing process of a light source portion according to an embodiment of the invention.
FIG. 12 is a drawing showing an image according to the on/off state of the light source of FIG. 11.
FIGS. 13 and 14 are drawings showing a three-dimensional image using a lighting device according to an embodiment of the invention.
FIG. 15 is a drawing showing an example of a display using a lighting device according to an embodiment of the invention.
FIG. 16 is a drawing showing an example of a plan view of a vehicle having the lighting device of the invention.
FIG. 17 is an example of a taillight of a vehicle to which the lighting device of FIG. 16 is applied.

### [Best Mode]

Hereinafter, preferred embodiments of the invention will be described in detail with reference to the accompanying drawings.

The technical idea of the present invention is not limited to some of the described embodiments, but may be implemented in various different forms, and if it is within the scope of the technical idea of the present invention, one or more of its components may be selectively combined and substituted between embodiments. In addition, terms (including technical and scientific terms) used in the embodiments of the present invention, unless explicitly specifically defined and described, may be interpreted as a meaning that may be generally understood by those skilled in the art to which the present invention belongs, and terms generally used, such as terms defined in the dictionary, may be interpreted in consideration of the context of the related technology. Terms used in the embodiments of the present invention are for describing the embodiments and are not intended to limit the present invention. In the present specification, the singular form may include a plural form unless specifically described in the phrase, and may include at least one of all combinations that may be combined as A, B, and C when described as "A and/or at least one (or more than one) of B and C". Also, terms such as first, second, A, B, (a), and (b) may be used to describe components of an embodiment of the present invention. These terms are intended only to distinguish the components from other components and are not determined by their nature, sequence, or order. Also, when a component is described as being 'connected', 'coupled' or 'connected' to another component, not only when the component is directly connected, coupled or connected to another component, it may also be 'connected', 'coupled', or 'connected' due to another component between that component and the other component. In addition, when each component is described as being formed or disposed "up (above) or down (bottom)", the up (down) or down (bottom) includes not only when two components are in direct contact with each other, but also when one or more components are formed or disposed between two components. Also, when expressed as "up (above) or down (bottom)", it may include the meaning of not only the upward direction but also the downward direction based on one component.

The lighting device according to the present invention may be applied to various lamp devices requiring lighting, such as vehicle lamps, household lighting devices, or industrial lighting devices. For example, when applied to vehicle lamps, it may be applied to headlamps, side lights, turn signals, side mirror lights, fog lights, tail lights, reverse lights, brake lights, daytime running lights, vehicle interior lights, door scuffs, rear combination lamps, backup lamps, etc. The lighting device of the present invention can also be applied to indoor and outdoor advertising devices, display devices, and various types of electric vehicles, and in addition, it may be applied to all lighting-related fields or advertising-related fields that are currently developed and commercialized or may be implemented with future technological advancements.

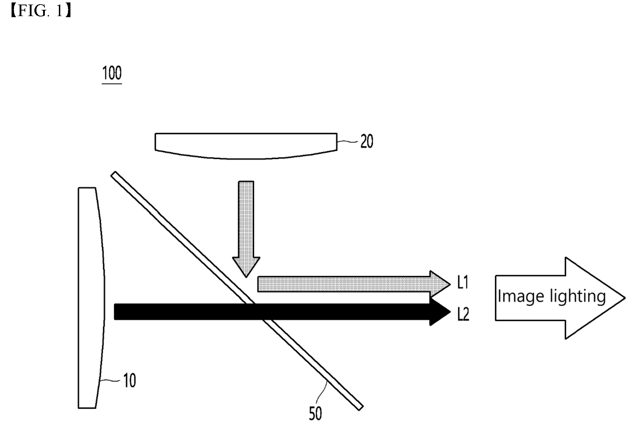

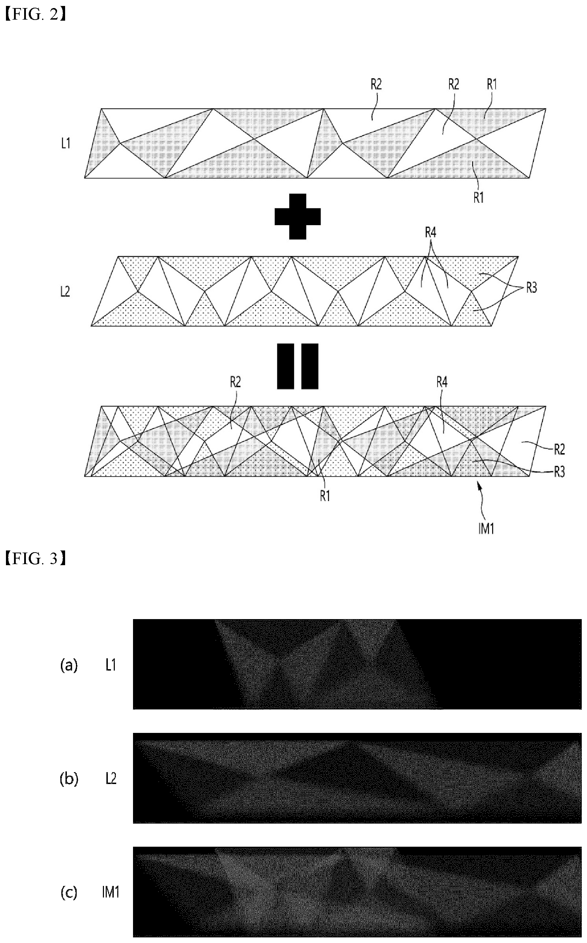

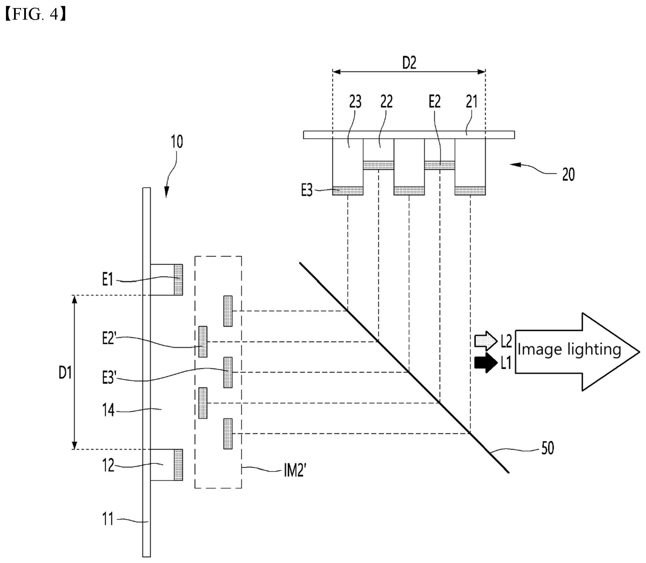

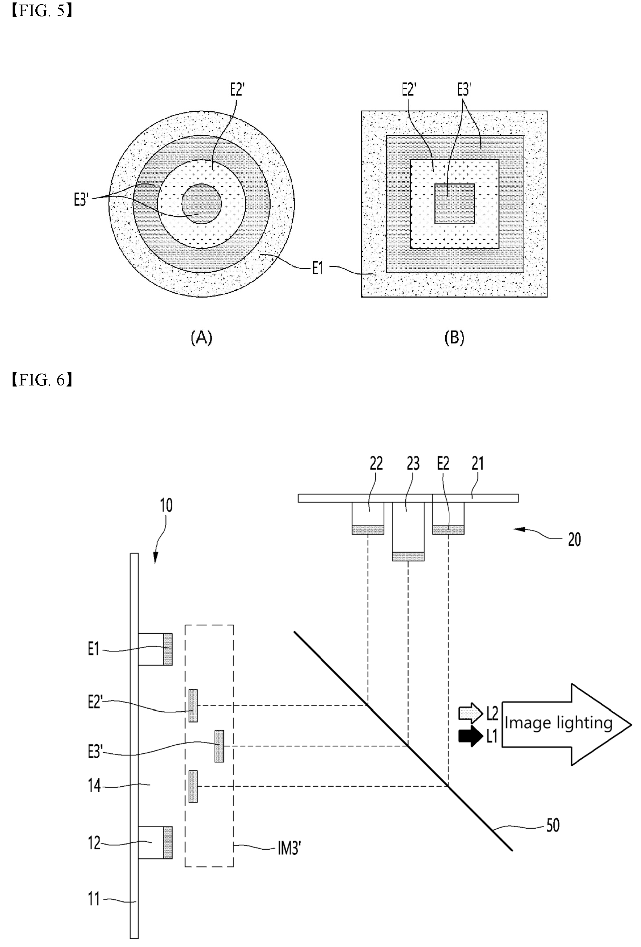

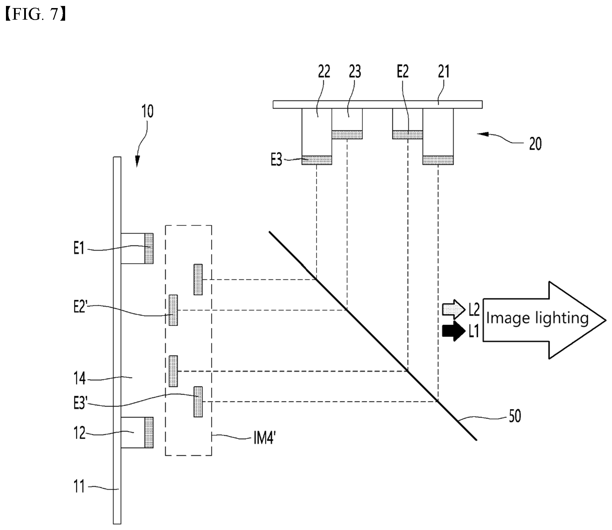

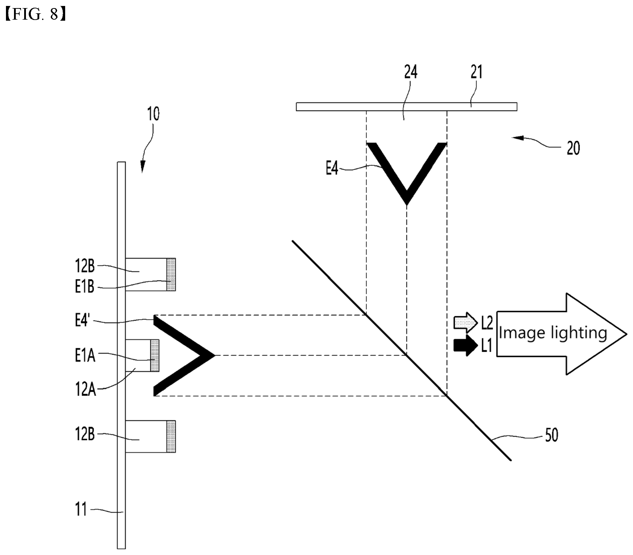

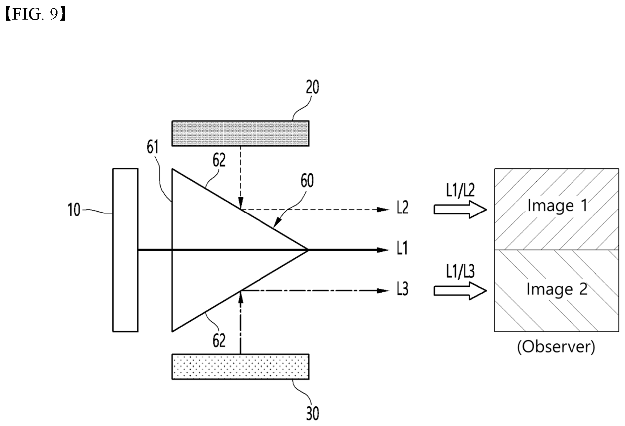

FIG. 1 is a side cross-sectional view showing a lighting device according to an embodiment of the invention, FIG. 2 is a view showing a lighting image of the lighting device of FIG. 1, FIG. 3 is a view showing three-dimensional lighting by the lighting device of FIG. 1, FIG. 4 is a side cross-sectional view showing a first example of a lighting device according to an embodiment of the invention, FIGS. 5(A) and 5(B) are views showing examples of lighting images by the lighting device of FIG. 4, FIG. 6 is a side cross-sectional view showing a second example of a lighting device according to an embodiment of the invention, FIG. 7 is a side cross-sectional view showing a third example of a lighting device according to an embodiment of the invention, FIG. 8 is a side cross-sectional view showing a fourth example of a lighting device according to an embodiment of the invention, and FIG. 9 is a side cross-sectional view showing a fifth example of a lighting device according to an embodiment of the invention.

Referring to FIG. 1, a lighting device 100 according to an embodiment of the invention includes a plurality of light source portions 10 and 20, and an optical member 50 that transmits and reflects light emitted from the plurality of light source portions 10 and 20. The lighting device 100 can illuminate with a superimposing image or pattern of light emitted from different light sources 10 and 20. Furthermore, the lighting device 100 may provide the superimposing image or pattern as interior or exterior lighting for a vehicle. Furthermore, the lighting device 100 can output light through a curved region, a flat region, a region having both a curved surface and a flat surface, or a bar region of a lamp.

The plurality of light sources 10 and 20 may be disposed on different planes or in directions orthogonal to each other. The plurality of light sources 10 and 20 may include at least two light sources, for example, a first light source 10 and a second light source 20 disposed on different planes.

The optical member 50 may include a beam splitter, which may transmit light incident on a first path and reflect light incident on a second path. The optical member 50 may transmit the first light L1 emitted from the first light source portion 10 and reflect the second light L2 emitted from the second light source portion 20. The optical member 50 may be disposed in a range of 45 degrees ± 30 degrees or a range of 135 degrees ± 30 degrees with respect to the second optical axis of the second light source portion 10. The second light source portion 10 may be disposed parallel to the first optical axis of the first light source portion 10. As another example, the optical member 50 may reflect the first light L1 emitted from the first light source portion 10 and transmit the second light L2 emitted from the second light source portion 20. Here, the first optical axis is the central axis along which light is emitted from the first light source portion 10, and the second optical axis is the central axis along which light is emitted from the second light source portion 20.

The first light source portion 10 may emit first light L1 having a first color, and the second light source portion 20 may emit second light L2 having a second color. The first color may be at least one of yellow, red, green, white, and blue. The second color may be at least one of yellow, red, green, white, and blue. The first and second colors may be the same color or different colors. The first light L1 of the first light source portion 10 may be provided in the shape of a first image or a first pattern, and the second light L2 of the second light source portion 20 may be provided in the shape of a second image or a second pattern.

The first and second light source portions 10 and 20 may each have the same or different numbers of internal light-emitting devices. The lengths of the light-emitting surfaces of the first and second light source portions 10 and 20 may be the same or different. The widths of the light-emitting surfaces of the first and second light source portions 10 and 20 may be the same or different. The first light source portion 10 may be a main light source, and the second light source portion 20 may be an auxiliary light source. Such a lighting device 100 may have one main light source and one or more auxiliary light sources. The two or more auxiliary light sources may be respectively positioned on a plane parallel to the optical axis of the main light source or may have light-emitting surfaces parallel to the optical axis of the main light source.

The light-emitting surface of the first light source portion 10 may be flat or curved, and the light-emitting surface of the second light source portion 20 may be flat or curved. The first light L1 has a point, line, or surface shape, and the line shape may include a straight line, a curved line, or a curved line, and the surface shape may include a circular shape, a polygonal shape, an irregular shape having a curve, an irregular shape mixing curves and straight lines, etc. Specifically, the first and second lights L1 and L2 are linear light or surface light. For example, one of the first and second lights L1 and L2 is linear light, the other is surface light, and both of the first and second lights L1 and L2 may provide linear light or surface light. The first and second lights L1 and L2 may have a difference in luminosity.

The first and second lights L1 and L2 overlap on the exit side of the optical member 50 and may be provided as a light image toward the viewer. For example, as shown in FIGS. 2 and 3, the first light L1 may be provided as a first surface light R1 and a second surface light R2, and the second light L2 may be provided as a third surface light R3 and a fourth surface light R4. The first surface light R1 may be a first image or a turn-on image, and the second surface light R2 may be provided as a second image or a turn-off image in an area between the first surface lights R1. The third surface light R3 may be a third image or a turn-on image, and the fourth surface light R4 may be provided as a fourth image or a turn-off image in a region between the third surface lights R3. An image IM1 in which the first surface light L1 and the second surface light L2 superimpose may be provided in a form in which the first to fourth surface lights R1, R2, R3, and R4 superimpose. That is, the superimposing image IM1 may be implemented as a three-dimensional image by the first to fourth surface lights R1, R2, R3, and R4.

Referring to FIGS. 4 and 5, the first light source portion 10 has a first light-emitting portion 12 having an open inner surface and a circular or polygonal shape, and the second light source portion 20 may have a plurality of second light-emitting portions 22 and 23 having different heights from the upper surface of the second substrate 21. The length D1 of the open region 14 of the first light-emitting portion 12 is the inner length and may be equal to the length D2 of the second light source portion 20. As another example, the length D1 of the open region 14 of the first light-emitting portion 12 may be smaller or larger than the length D2 of the second light source portion 20. The length D2 of the second light source portion 20 is the length of the first light source portion 10 in the first optical axis direction, and the inner length D1 of the first light source portion 10 is the length of the second light source portion 20 in the second optical axis direction. As another example, the area of the open region 14 of the first light-emitting portion 12 may be the same as the light emitting area of the second light source portion 20.

The first light-emitting portion 12 may be disposed on the first substrate 11 and may have a first light emitting surface E1 on the emission side. The plurality of second light-emitting portions 22 and 23 may be disposed on the second substrate 21 and may have second light emitting surfaces E2 and E3 on the emission side. Here, the first optical axis of the first light source portion 10 is a direction perpendicular to the first light emitting surface E1 of the first light-emitting portion 12 or a direction perpendicular to the upper surface of the first substrate 11, and the second optical axis of the second light source portion 20 is a direction perpendicular to the second light emitting surface E2 and E3 of the second light-emitting portion 22 and 23 or a direction perpendicular to the upper surface of the second substrate 21. In addition, the first optical axis direction is a direction in which the first light L1 of the first light source portion 10 is emitted, and the second optical axis direction is a direction in which the second light L2 of the second light source portion 20 is emitted. The upper surface of the first substrate 11 is a surface on which the first light-emitting portion 11 is mounted, and the upper surface of the second substrate 21 is a surface on which the second light-emitting portion 22 and 23 is mounted.

The first light-emitting surface E1 of the first light-emitting portion 12 may be positioned at the same height relative to the upper surface of the first substrate 11. When the first light-emitting surface E1 emits light, the inner open region 14 may have a circular or polygonal shape. The second light-emitting surfaces E2 and E3 may be positioned at different heights relative to the upper surface of the second substrate 21. Accordingly, the light emitted through the second light-emitting surfaces E2 and E3 may have a difference in luminosity.

The plurality of second light-emitting portions 22 and 23 include one or more second-first light-emitting portions 22 and one or more second-second light-emitting portions 23. The second-first light-emitting portions 22 may be disposed on the inner and outer sides of the second-second light-emitting portions 23. For example, the second-second light-emitting portions 23 may be disposed on the outer side or around the inner light-emitting portion and may be disposed on the inner side of the outer light-emitting portion. The second-second light-emitting portions 23 may include a light-emitting portion disposed on the inner side of the second-first light-emitting portion 22 and a light-emitting portion disposed on the outer side. Among the second light-emitting portions 22 and 23, one of the second-first light-emitting portions 22 may have a first thickness, and the other of the second-second light-emitting portions 23 may have a second thickness greater than the first thickness. A second-first light-emitting portion 22 having a first thickness may be positioned between second-second light-emitting portions 23 having a second thickness. That is, adjacent second light-emitting portions 22 and 23 may have different thicknesses.

The height of the second-second light-emitting surface E3 of the second-second light-emitting portion 23 based on the upper surface of the second substrate 21 may be higher than the height of the second-first light-emitting surface E2 of the second-first light-emitting portion 22. One or more first light-emitting portions 12 may have the first or second thickness, or a thickness different from the first and second thicknesses.

The first light source portion 10 emits first light L1 through the first light-emitting surface E1, and the second light source portion 20 emits second light L2 through the second light-emitting surfaces E2 and E3. The first light L1 is incident on one side of the optical member 50, and the second light L2 is incident on the other side of the optical member 50. The optical member 50 transmits the first light L1 having the image of the first light-emitting surface E1 of the first light source portion 10, and reflects and emits the second light L2 having the image of the second light-emitting surfaces E2 and E3 of the second light source portion 20. The propagation paths of the first and second lights L1 and L2 may be in the same direction due to the optical member 50. At this time, when viewed from the observer's side, the lighting image may be seen in the form of an image IM2' of a virtual second light-emitting surface E2' and E3' being superimposed on the inside of the image of the first light-emitting surface E1. Accordingly, as shown in (A)(B) of FIG. 5, the lighting image may be provided as an image in which the images of the second light-emitting surfaces E2' and E3' having different heights are superimposed on the inside of the image of the first light-emitting surface E1. Alternatively, the lighting image may be displayed in a shape in which the patterns of the second light-emitting surfaces E2' and E3' having different heights are superimposed on the inside of the pattern of the first light-emitting surface E1. In addition, when the lighting image is viewed from a different angle, for example, an oblique angle rather than a frontal view, the images of the first light-emitting surface E1 and the second light-emitting surfaces E2' and E3' may be provided as three-dimensional images having different heights.

FIG. 6 is a modified example of FIG. 4, in which the plurality of second light-emitting portions 22 and 23 of the second light source portion 20 may be spaced apart from each other at a predetermined interval and have different thicknesses. The adjacent second light-emitting portions 22 and 23 may be spaced apart from each other in the first optical axis direction. As another example, the adjacent second light-emitting portions 22 and 23 may be spaced apart in a first optical axis direction that is orthogonal to the second optical axis direction. The second optical axis direction of the second light-emitting portions 22 and 23 is a direction perpendicular to the second light-emitting surface E2 and E3. That is, the second-second light-emitting portion 23 may be disposed inside the second-first light-emitting portion 22. The thickness of the second-second light-emitting portion 23 may be greater than the thickness of the second-first light-emitting portion 22. The height of the second-second light-emitting surface E3 of the second-second light-emitting portion 23 with respect to the upper surface of the substrate 21 may be greater than the height of the second-first light-emitting surface E2 of the second-first light-emitting portion 22.

The optical member 50 transmits the first light L1 having the image of the first light-emitting surface E1 of the first light source portion 10, and reflects and emits the second light L2 having the image of the second light-emitting surface E2 and E3 of the second light source portion 20. At this time, when viewed from the observer's side, the lighting image may be seen in the form of an image IM3' of a virtual second light-emitting surface E2' and E3' being superimposed on the inside of the image of the first light-emitting surface E1. Accordingly, the lighting image may be provided as an image in which images of virtual second light-emitting surfaces E2' and E3' having different heights and spaced apart from each other are superimposed on the inside of the image of the first light-emitting surface E1. Alternatively, the lighting image may be displayed in a form in which patterns of second light-emitting surfaces E2' and E3' having different heights are superimposed on the inside of the pattern of the first light-emitting surface E1. Here, the second light-emitting surfaces E2' and E3' may be provided in a shape spaced apart in the second optical axis direction orthogonal to the first optical axis of the first light source portion 10. Furthermore, when the lighting image is viewed from a different angle, for example, from an oblique angle rather than a frontal view, the images of the first light-emitting surface E1 and the second light-emitting surfaces E2' and E3' may be provided as a three-dimensional image having different heights and shapes spaced apart from each other.

FIG. 7 illustrates a modified example of FIG. 4, wherein the plurality of second light-emitting portions 22 and 23 of the second light source portion 20 are spaced apart in unit light-emitting groups and may have different thicknesses. Adjacent groups of the second light-emitting portions 22 and 23 may be spaced apart from each other in the first optical axis direction of the first light-emitting portion 21. As another example, the unit groups of the second light-emitting portions 22 and 23 may be spaced apart in the direction of the first optical axis orthogonal to the second optical axis. Here, each of the unit groups includes at least one second-first light-emitting portion 22 and at least one second-second light-emitting portion 23, and the interval between the unit groups may be greater than the interval between the second-first light-emitting portions 22 and the second-second light-emitting portions 23 within the unit group. In addition, the adjacent unit groups may have the second-first light-emitting portions 22 facing each other or disposed inside each other, and the second-second light-emitting portions 23 of each unit group may be arranged outside the second-first light-emitting portions 22 of each unit group.

The optical member 50 transmits the first light L1 having the image of the first light-emitting surface E1 of the first light source portion 10, and reflects and emits the second light L2 having the image of the second light-emitting surface E2 and E3 of the second light source portion 20. At this time, when viewed from the observer's side, the lighting image may be seen in the form of an image IM4' of a virtual second light-emitting surface E2' and E3' being superimposed on the inside of the image of the first light-emitting surface E1. Accordingly, the lighting image may be provided as an image in which images of a group of virtual second light-emitting surfaces E2' and E3' having different heights and being spaced apart from each other are superimposed on the inside of the image of the first light-emitting surface E1. Here, the group of virtual second light-emitting surfaces E2' and E3' may be provided in a shape spaced apart in a direction orthogonal to the optical axis of the first light source portion 10. Furthermore, when the lighting image is viewed from a different angle, for example, from an oblique angle rather than a frontal view, the images having the first light-emitting surface E1 and the second light-emitting surfaces E2' and E3' may have different heights and may be provided as a three-dimensional image in which the unit groups are spaced apart from each other.

FIG. 8 is a modified example of FIG. 4, wherein the first light source portion 10 may have a plurality of first light-emitting portions 12A and 12B, and the second light source portion 20 may have a second light-emitting portion 24. The plurality of first light-emitting portions 12A and 12B may be spaced apart in the second optical axis direction orthogonal to the first optical axis of the first light source portion 10 and may have different thicknesses. The plurality of first light-emitting portions 12A and 12B include a first-first light-emitting portion 12A and a first-second light-emitting portion 12B, and the first-second light-emitting portion 12B may be disposed on the outside of the first-first light-emitting portion 12A. The thickness of the first-second light-emitting portion 12B may be thicker than the thickness of the first-first light-emitting portion 12A. The first-second light-emitting surface E1B of the first-second light-emitting portion 12B may be higher than the height of the first-first light-emitting surface E1A of the first-first light-emitting portion 12A based on the upper surface of the first substrate 11. The first-second light-emitting portion 12B and the first-first light-emitting portion 12A may be disposed on one side, both sides, or the periphery. Accordingly, the light-emitting surfaces E1A and E1B of the first light-emitting portions 12A and 12B may have different heights and be spaced apart from each other.

The second light-emitting portion 24 of the second light source portion 20 may be provided in a triangular shape in which the central height of the second light-emitting portion 24 is the highest on the upper surface of the second substrate 21 in the second optical axis direction of the second light source portion 20 and the height decreases toward both sides, and the second light-emitting surface E4 may have a shape that is inclined toward both sides of the center of the second light-emitting portion 24. The inclined regions on both sides of the second light-emitting surface E4 of the second light-emitting portion 24 may be connected to each other. The width of the second light-emitting portion 24 in the first optical axis direction may be greater than the width of the first light-emitting portion 12A and 12B in the second optical axis direction. The width of the second light-emitting surface E4 in the first optical axis direction may be greater than the width of each of the first light-emitting surfaces E1A and E1B in the second optical axis direction.

The optical member 50 transmits the first light L1 having the image of the first light-emitting surface E1A and E1B of the first light source portion 10, and reflects and emits the second light L2 having the image of the second light-emitting surface E4 of the second light source portion 20. At this time, when viewed from the observer's side, the lighting image may be seen in the form of an image of a virtual second light-emitting surface E4' being superimposed on the image of the first light-emitting surface E1A and E1B. When the second light-emitting surface E4 and the first-first light-emitting surface E1A are superimposed, the width of the second light-emitting surface E4 may be greater than the width of the first-first light-emitting surface E1A. Accordingly, the lighting image may be provided as an image in which an image of a virtual second light-emitting surface E4' having different heights and being inclined is superimposed on the image of the first light-emitting surface E1A and E1B. Here, the virtual second light-emitting surface E4' may overlap the light-emitting surface E1A of the first light-emitting portion 12A centered on the first light source portion 10 along the first optical axis of the first light source portion 10. When the lighting image is viewed from a different angle, for example, from an oblique angle rather than a frontal view, the light-emitting portions E1A, E1B, and E4' may have different heights and shapes and may be provided as a three-dimensional image.

Referring to FIG. 9, the first to third light source portions 10, 20, and 30 may be disposed in different directions relative to the optical member 60. For example, the first and second light source portions 10 and 20 may be arranged orthogonally to each other, and the first and third light source portions 10 and 30 may be arranged orthogonally to each other. The third light source portion 30 and the second light source portion 20 may be positioned on opposite sides with respect to the optical member 60.

The optical member 60 transmits the first light L1 emitted from the first light source portion 10, reflects the second light L2 emitted from the second light source portion 20, and reflects the third light L3 emitted from the third light source portion 30. The optical member 60 is provided as a prism-shaped beam splitter and transmits or reflects the light L1, L2 and L3 in one direction. When viewed from the observer's side, the first image may be provided as an image in which the first and second lights L1 and L2 overlap, and the second image may be provided as an image in which the second and third lights L2 and L3 overlap. Accordingly, from the observer's perspective, the displayed image may be simultaneously or individually displayed as a first image overlapping the first and second lights L1 and L2 and a second image overlapping the second and third lights L2 and L3. Furthermore, the displayed image at an angle may be provided as a three-dimensional image in which the first, second, and third lights L1, L2 and L3 are selectively overlapping.

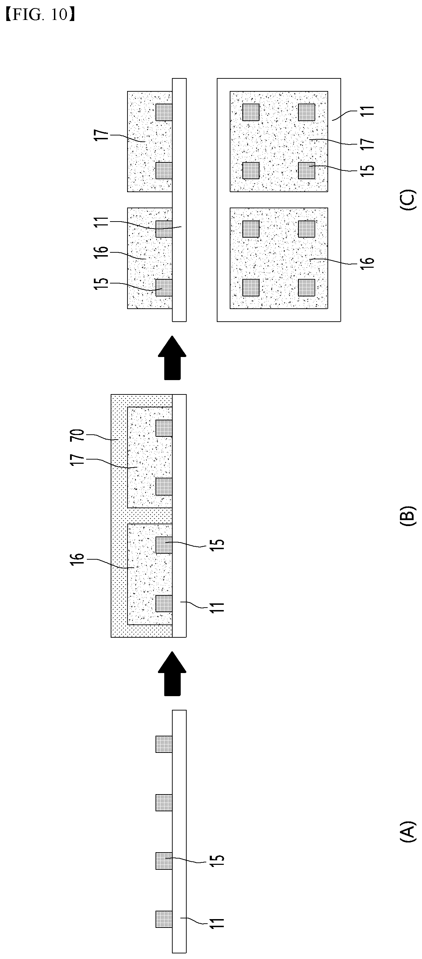

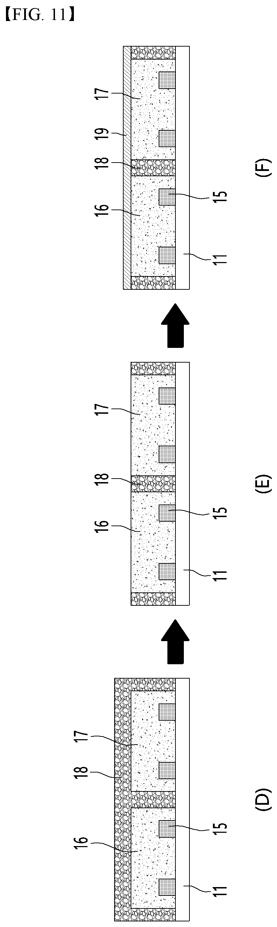

FIGS. 10 and 11 illustrate the manufacturing process of a light source portion according to an embodiment of the invention. The following description will focus on the manufacturing process of the first light source portion.

As shown in FIG. 10(A)(B), a plurality of light-emitting devices 15 may be disposed on a first substrate 11. The plurality of light-emitting devices 15 may be disposed in M rows and N columns, where N and M may be 2 or 3 or more, and N and M may be the same or different. On the first substrate 11, the molding portions 16 and 17 are separated using a molding die 70 and molded into a plurality of light-emitting regions. Each light-emitting region may include one or more light-emitting devices 15 and a molding portion 16 and 17 covering the light-emitting devices 15. The molding portions 16 and 17 may include a light-transmitting material such as silicone or epoxy. The molding portions 16 and 17 may be defined as a resin portion or a light-transmitting portion. At least one or both of the molding portions 16 and 17 may include a phosphor that converts a portion of the light emitted from the light-emitting devices 15 into a wavelength. When the molding portions 16 and 17 are injection-molded and hardened, the molding portion 70 is separated. FIG. 10(C) is a cross-sectional view and a plan view with the mold removed, wherein the molding portions 16 and 17, i.e., the light-emitting regions, may be arranged spaced apart from each other. The molding portions 16 and 17 may have the same or different thicknesses.

As shown in FIG. 11(D)(E), a partition wall 18 is formed on the surface of the molding portions 16 and 17. The partition wall 18 may be formed on the upper and side surfaces of the molding portions 16 and 17. Furthermore, the partition wall 18 may also fill the region between the molding portions 16 and 17. The partition wall 18 may include a light-absorbing material or a light-reflecting material. Thereafter, the partition wall 18 disposed on the upper surfaces of the molding portions 16 and 17 is removed, thereby exposing the light-emitting region. As shown in FIG. 11(F), a diffusion layer 19 is formed on the upper surface of the molding portion 16 and 17. The diffusion layer 19 is disposed on the upper surface of the molding portion 16 and 17 and may extend to the upper surface of the partition wall 18. The diffusion layer 19 may be made of a resin material such as silicone or epoxy, in which a diffusion agent, for example, beads such as TiO₂ or SiO₂, may be added. The diffusion layer 19 may be provided as a diffusion sheet such as polycarbonate. The light source portion disclosed above may be manufactured through such a manufacturing process. The diffusion layer 19 may function as a light-emitting surface of each light source portion. These light source portions may be manufactured as first to third light source portions.

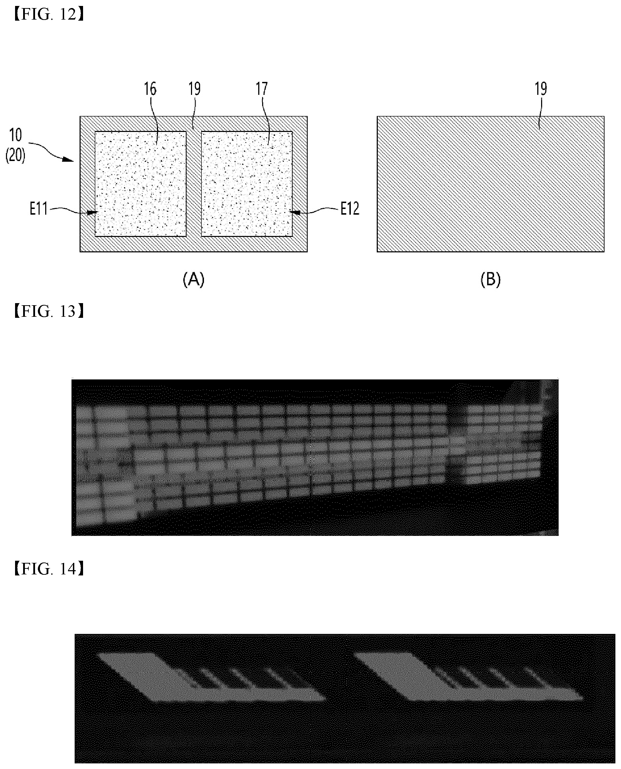

FIG. 12(A) is an image when the light-emitting device 15 illustrated in FIG. 11(F) is turned on within the light source portion 10 and 20, and FIG. 12(B) is an image when the light-emitting device 15 illustrated in FIG. 11(F) is not turned on within the light source portion 10 and 20. That is, the light source portion 10 and 20 can provide a lit image and a not lit image due to the on/off of the light-emitting device as described above. In FIG. 10(B), the thickness of the molding portion 16 and 17 may be provided to be the same or different. In FIG. 10(B), the upper surface of the molding portion 16 and 17 may have a convex portion or a concave portion. The top view shape of the molding portion 16 and 17 may include a pattern having a circular or polygonal shape. As another example, the upper surface of at least one of the molding portions 16 and 17 may be formed to have a slope from one side to the other. The thickness and position of the light-emitting surfaces of the first and second light source portions 10 and 20 may also be adjusted. The color and intensity of light emitted from the light-emitting surfaces of the first and second light source portions 10 and 20 may be changed.

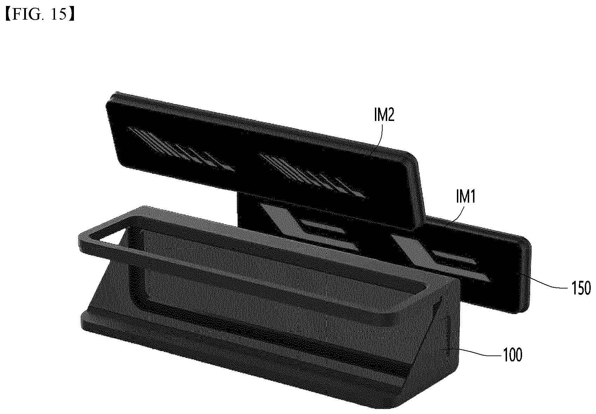

As shown in FIG. 13, the light-emitting surfaces in the lighting image may be displayed as a three-dimensional image with light-emitting surfaces of different depths. As shown in FIG. 14, the light-emitting surfaces in the lighting image may be displayed as a three-dimensional image with light-emitting surfaces of different widths. Furthermore, as shown in FIG. 15, different three-dimensional images IM-1 and IM-2 may be displayed on the display portion 150 positioned on the emission side of the lighting device 100 disclosed above. Each of the three-dimensional image IM-1 and IM-2 may be an image in which the light from the primary and secondary light sources overlaps.

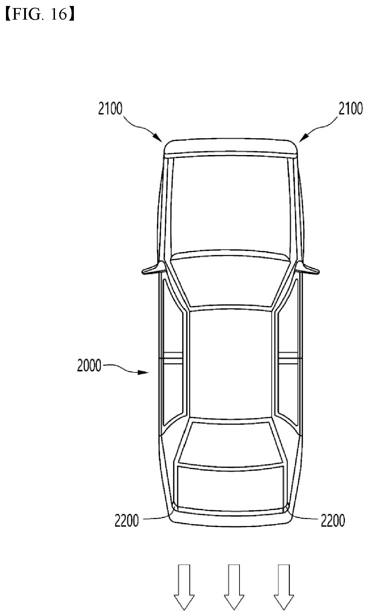

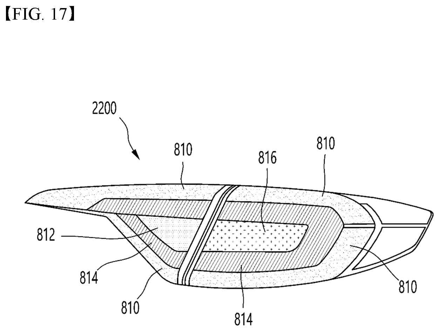

FIG. 16 is a plan view of a vehicle to which a lighting device according to an embodiment is applied, and FIG. 17 is a drawing showing an example of a tail light of the vehicle of FIG. 16.

Referring to FIGS. 16 and 17, a front lamp 2100 in a moving object or vehicle 2000 may include one or more lighting modules, and the driving timing of these lighting modules may be individually controlled to provide not only a function as a conventional headlight, but also additional functions such as a welcome light or a celebration effect when a driver opens a vehicle door. The lamp may be applied to a daytime running light, a high beam, a low beam, a fog light, or a turn signal. A tail light 2200 in a vehicle 2000 may be arranged as a plurality of lamp units 810, 812, 814, and 816 supported by a housing. For example, the lamp units 810, 812, 814, and 816 may include a first lamp unit 810 disposed on the outside, a second lamp unit 814 disposed on the inner periphery of the first lamp unit 810, and third and fourth lamp units 812 and 816 disposed on the inside of the second lamp unit 814, respectively. The first to fourth lamp units 810, 812, 814, and 816 may selectively apply the lighting device disclosed in the embodiment, and a red lens cover or a white lens cover may be disposed on the outside of the lighting device for the lighting characteristics of the lamp unit 810, 812, 814, and 816. The lighting device disclosed in the embodiment applied to the lamp units 810, 812, 814, and 816 may emit surface light with a uniform distribution.

The first and second lamp units 810 and 814 may be provided in at least one of a curved shape, a straight shape, an angular shape, an inclined shape, or a planar shape, or a mixed structure thereof. The first and second lamp units 810 and 814 may be disposed one or more times in each tail light. The first lamp unit 810 may be provided as a tail light, the second lamp unit 814 may be provided as a brake light, the third lamp unit 812 may be provided as a reverse light, and the fourth lamp unit 816 may be provided as a turn signal lamp. The structure and position of these lighting lamps may be changed.

Features, structures, effects, etc. described in the above embodiments are included in at least one embodiment of the invention, and are not necessarily limited to only one embodiment. Furthermore, features, structures, effects, etc. illustrated in each embodiment may be combined or modified for other embodiments by those of ordinary skill in the art to which the embodiments belong. Accordingly, the contents related to such combinations and modifications should be interpreted as being included in the scope of the invention. In addition, although the embodiments have been mainly described above, this is only an example and does not limit the present invention, and one of ordinary skill in the field to which the present invention belongs will appreciate that various modifications and applications not illustrated above may be possible without departing from the essential characteristics of the present embodiment. For example, each component specifically shown in the embodiment may be implemented by modification. And differences related to such modifications and applications should be construed as being included in the scope of the invention defined in the appended claims.

## Claims

1. A lighting device comprising:
a first light source portion;
an optical member disposed obliquely on the first light source portion; and
a second light source portion disposed on another side of the optical member,
wherein the second light source portion is disposed in a direction perpendicular to a first optical axis of the first light source portion,
wherein the optical member transmits first light emitted from the first light source portion and reflects second light emitted from the second light source portion,
wherein each of the first and second lights emitted through the optical member is linear light or surface light and is provided as a superimposed three-dimensional image.

2. The lighting device of claim 1, wherein the first light source portion comprises: a first substrate; a first light-emitting portion disposed on the first substrate and having an open inner surface; and a first light-emitting surface on the first light-emitting portion.

3. The lighting device of claim 2, wherein the second light source portion includes a second substrate, a plurality of second light-emitting portions disposed on the second substrate and spaced apart in the first optical axis direction of the first light source portion, and a plurality of second light-emitting surfaces disposed on each of the second light-emitting portions.

4. The lighting device of claim 3, wherein at least one of the first light-emitting portion and the plurality of second light-emitting portions has a different thickness.

5. The lighting device of claim 3, wherein the length of the second light source portion is a length of the first light source portion in the first optical axis direction and is less than or equal to a length of the open region of the first light source portion.

6. The lighting device of claim 3, wherein the plurality of first light source portions is spaced apart in the second optical axis direction of the second light source portion, and a second optical axis direction is orthogonal to the first optical axis direction.

7. The lighting device of claim 3, wherein the second light-emitting portion includes a second-first light-emitting portion and second-second light-emitting portions disposed inside and outside the second-first light-emitting portion.

8. The lighting device of claim 7, wherein the second-second light-emitting surface of the second-second light-emitting portion is positioned higher than the second-first light-emitting surface of the second-first light-emitting portion with respect to the second substrate.

9. The lighting device of claim 1 or 2, wherein the surface light images of the first and second lights have different shapes.

10. The lighting device of any one of claims 1 to 3, comprising:
a third light source portion disposed on the other side of the optical member,
wherein the optical member reflects the third light emitted from the third light source portion.

11. The lighting device of claim 10, wherein a lighting image of the lights emitted through the optical member is displayed as at least one of a first image in which the first and second lights superimpose and a second image in which the second and third lights superimpose.

12. A lamp comprising:
a lighting device; and
a lamp having the lighting device,
wherein the lighting device is any one of claims 1 to 8, and
wherein the lamp is a lamp applied to the interior or exterior of a vehicle.
